# FASCICULE DE BREVET EUROPEEN

(11) **EP 0 304 360 B1**
(45) Date de publication et mention de la délivrance du brevet: **31.03.1993**
(21) Numéro de dépôt: 88401908.4
(22) Date de dépôt: 22.07.1988
(51) Int. Cl.: G01S 3/78

(54) **Système détecteur d'impulsions lumineuses à taux de fausse alarme très réduit, utilisable pour la détection laser**
Vorrichtung zum Nachweis von Lichtimpulsen mit sehr geringer Falschalarmrate und Verwendung zum Lasernachweis
Arrangement for the detection of light pulses with a very low false alarm rate for use in laser detection

(30) Priorité: 31.07.1987 FR 8710874
(43) Date de publication de la demande: 22.02.1989
(73) Titulaire: THOMSON-CSF, 75008 Paris (FR)
(72) Inventeur: Lemaire, Jean-Marc, F-75008 Paris (FR); Bellissant, Alain, F-75008 Paris (FR); Fauchard, Jean-Pierre, F-75008 Paris (FR)
(74) Mandataire: Lincot, Georges

(56) Documents cités:
- WO-A-82/03146
- GB-A- 1 048 523
- GB-A- 2 122 833
- US-A- 3 801 821
- PATENT ABSTRACTS OF JAPAN, vol. 5, no. 191 (P-92)[863], 5 décembre 1981, page 58 P 92; JP-A-56 115 925
- PATENT ABSTRACTS OF JAPAN, vol. 8, no. 208 (P-302)[1645], 21 septembre 1984;& JP-A-59 91 340

## Description

La présente invention concerne un système de détection d'impulsions lumineuses, notamment d'impulsions émises par un laser, et dont le taux de fausse alarme est notablement réduit.

Par impulsions lumineuses on entend des impulsions de longueurs d'onde comprises aussi bien dans le spectre visible qu'invisible, en particulier, dans le proche ou le lointain infrarouge, par exemple pour des radiations laser à 1,06 microns et à 10,6 microns.

La réduction du taux de fausse alarme est obtenue par insensibilisation du système détecteur aux signaux parasites et en particulier, aux impulsions électriques créees par les photodétecteurs eux-mêmes en l'absence de toute source d'énergie optique irradiante.

Ce résultat est obtenu selon l'invention en aménageant les voies optroniques de détection par la mise en parallèle pour chaque voie de deux photodétecteurs couplés à une même voie optique. Un traitement analogique (ou numérique) spécifique des impulsions détectées permet ensuite, par corrélation, de détecter et de valider les impulsions lumineuses reçues et de rejeter les impulsions parasites internes quelles que soient leurs caractéristiques de largeur, d'amplitude et de répétition.

Selon une application plus particulièrement envisagée l'invention concerne la détection d'impulsions laser et permet de réaliser un équipement assurant la fonction de détecteur d'alerte laser.

L'utilisation fréquente d'illuminateur laser sur les systèmes d'armes à des fins de télémétrie ou de désignation d'objectifs a imposé d'envisager une protection efficace des porteurs (véhicules armés, bâtiments ou aéronefs). Cette protection consiste d'abord à avertir l'équipage de la présence d'une menace laser pour entraîner une réaction immédiate ; c'est la fonction de base du détecteur d'alerte laser.

Les lasers opérationnels à ce jour émettent des impulsions de largeur égale à quelques nanosecondes. Un détecteur d'alerte laser se compose généralement de plusieurs capteurs optroniques. Chaque capteur est muni d'une optique couplée à un détecteur qui délivre un courant proportionnel à tout instant au flux qu'il reçoit. Le traitement électronique assure la détection du flux reçu dès que le signal détecté est supérieur à un seuil prédéterminé. Si l'on raisonne en courant ceci se traduit par une valeur du courant détecté supérieur à une valeur minimale IS1 résultant de la valeur de seuil de comparaison utilisée pour l'exploitation. Un tel détecteur est décrit par exemple dans le brevet GB 2 122 833.

Chaque voie optronique se trouve caractérisée par son champ qui est la partie de l'espace observée par le capteur et d'où les émissions lumineuses sont collectées sa sensibilité qui est la valeur de l'éclairement minimal détectable à l'entrée du capteur, et son taux de fausse alarme c'est-à-dire le nombre de fausses détections par heure de fonctionnement en l'absence de toute énergie lumineuse reçue.

Le champ et la sensibilité sont définies par les caractéristiques des illuminateurs, par les contraintes de conception du matériel et par les porteurs à protéger. Ces différentes caractéristiques conduisent à spécifier une valeur de seuil de courant IS1 à ne pas dépasser.

Le taux de fausse alarme caractérise la sûreté de l'information délivrée par le détecteur d'alerte ; la valeur varier entre 1 et 1/1000. La valeur 1/1000 correspond à une fausse alarme pour 1000 heures de fonctionnement pour l'ensemble des voies optoélectroniques. Les exigences de taux de fausse alarme, en abrégé TFA, imposent souvent un seuil de détection IS2 supérieur à la valeur limite IS1 précitée et donc incompatible des spécifications de champ et de sensibilité de l'équipement.

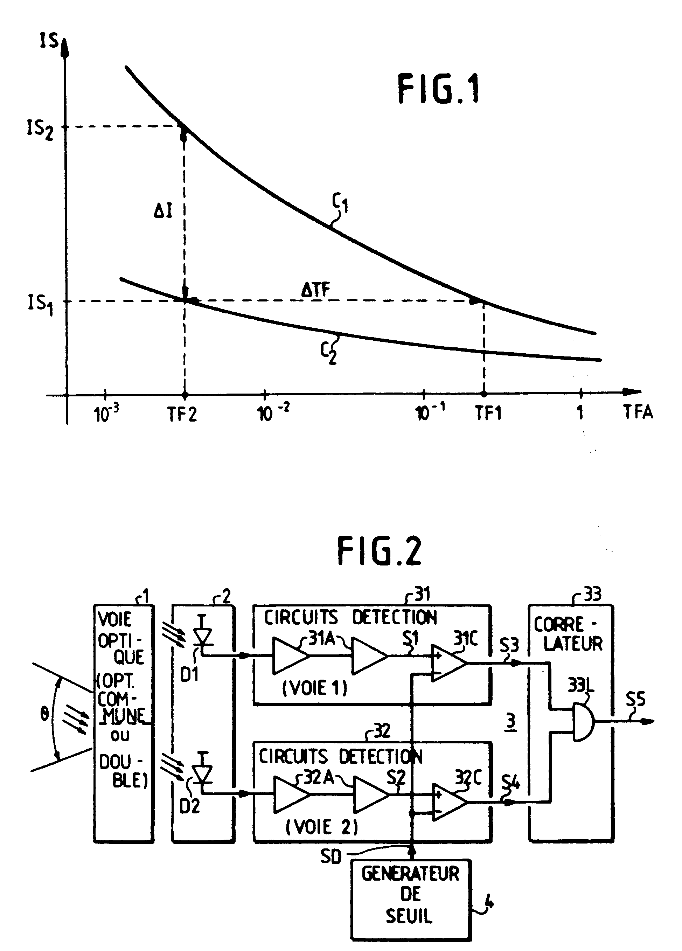

La présente invention apporte avec un aménagement simple de la voie optronique la possibilité de ramener la relation seuil IS en fonction du taux de fausse alarme TFA (courbe C1 de la figure 1 correspondant à un système non aménagé) à un ordre de grandeur compatible de la valeur limite IS1 (courbe C2 de la figure 2 correspondant à un système aménagé selon l'invention).

Les fausses alarmes peuvent être produites par des sources électromagnétiques externes au matériel (émissions radio, radar, arcs électriques) ou internes (parasites produits par certaines parties de l'équipement). Les fausses alarmes peuvent résulter également des sources de bruit aléatoires dues au détecteur et au traitement électronique. En troisième lieu, les fausse alarmes peuvent résulter de signaux créés spontanément au niveau des éléments détecteurs. Ces signaux sont sous forme d'impulsions très brèves. Elles sont filtrées par la caractéristique de réponse en fréquence du détecteur et se présentent vis-à-vis du traitement électronique sous une forme d'onde voisine des impulsions produites par les illuminateurs laser.

L'effet des sources électromagnétiques peut être réduit grâce à une conception appropriée (blindages, filtrages, suppressions des couplages gênants).

Les sources de bruit aléatoires restent compatibles généralement avec le seuil maximal de détection IS1.

Par contre, la génération spontanée d'impulsions au niveau du détecteur est prépondérante pour déterminer ensuite le taux de fausse alarme.

Par contre, la génération spontanée d'impulsions au niveau du détecteur est prépondérante pour déterminer ensuite le taux de fausse alarme.

L'objet de la présente invention est la mise en oeuvre d'un procédé de traitement qui distingue les signaux impulsionnels d'origine photonique ou signaux utiles, des signaux parasites et notamment de ceux créés par les détecteurs eux-même.

La discrimination de ces signaux parasites impulsionnels par la reconnaissance de forme ne peut être envisagée étant donné que les formes d'ondes sont voisines de celles des signaux utiles. Les différences de durée à observer, de l'ordre de quelques nanosecondes, impliquent la mise en oeuvre d'un traitement délicat. Enfin si le spectre des impulsions laser à considérer apparaissait toujours limité par le détecteur, cette observation expérimentale ne peut être généralisée dans l'absolu compte tenu des divers types de matériaux et de technologies des détecteurs.

Le but de l'invention est de remédier à tous ces inconvénients en aménageant de façon particulière les voies optroniques de l'équipement.

Selon l'invention, il est réalisé un système détecteur d'impulsions lumineuses à taux de fausses alarmes très réduit, comportant successivement : des moyens optiques de réception d'un rayonnement dans un champ total déterminé, ledit champ total étant couvert par au moins une voie optique réceptrice associée à un élément détecteur du rayonnement reçu, et des moyens de traitement des signaux détectés comprenant des circuits de sélection des signaux détectés supérieurs à un seuil et formant une voie détectrice, ledit système détecteur étant caractérisé en ce que, pour insensibiliser le système à des signaux parasites créés par l'élément détecteur et traités par la voie détectrice,il comprend en outre un deuxième élément détecteur couvrant la même partie du champ total de détection que le premier et couplé à une deuxième voie détectrice, les deux voies détectrices étant associées à la même voie optique et en ce que les moyens de traitement comprennent également des moyens de corrélation des signaux présents simultanément sur les deux voies détectrices pour produire une sélection ultérieure des impulsions lumineuses reçues.

Les particularités et avantages de l'invention apparaîtront dans la description qui suit donnée à titre d'exemple, à l'aide des figures annexées qui représentent :
- Fig.1, des courbes de variation du taux de fausse alarme en fonction du seuil dans un système non aménagé selon l'invention et dans un système équipé selon l'invention ;
- Fig.2, un bloc diagramme d'un système détecteur d'impulsions lumineuses conforme à l'invention dans sa version la plus simple comportant une seule voie optique ;
- Fig.3, des formes d'ondes des principaux signaux intervenant dans le fonctionnement du système selon la figure 2 ;
- Fig.4, un schéma général montrant la disposition angulaire décalée de plusieurs voies optiques pour assurer une couverture de champ total utilisable par exemple pour la détection laser panoramique ou sectorale ;
- Fig.5, un premier mode de réalisation d'un système de détection selon la figure 4 et conforme à l'invention ;
- Fig.6, un deuxième mode de réalisation d'un système de détection selon la figure 4 conforme à l'invention ;
- Fig. 7, un troisième mode de réalisation, préférentiel, d un système selon la figure 4 et conforme à l'invention.

En se rapportant à la figure 1, on note d'après la courbe C1 relative à un système non aménagé selon l'invention, un taux minimal de fausse alarme TF1 pour la valeur IS1 de seuil limitée pour des considérations de champ et sensibilité donnés.

Avec les aménagements selon l'invention, la courbe C2 montre que pour une même valeur de seuil le taux de fausse alarme passe de la valeur TF1 à la valeur TF2 et présente ainsi une réduction importante. A titre d'exemple, pour un seuil IS1 de 1,5 microampères, le TFA passe de 10 à environ 0,002 supérieure à IS1 et incompatible avec les caractéristiques de champ et de sensibilité envisagées.

La version de base est représentée sur la figure 2 qui montre un système avec une seule voie optique 1. Cette voie optique est constituée avec une optique commune ou avec deux optiques similaires pour couvrir le même champ total ϑ. A cette voie optique de réception 1 est associé un dispositif détecteur 2 composé de deux éléments détecteurs, un premier élément détecteur D1 et un deuxième élément détecteur D2, pour constituer deux voies détectrices avec les circuits de traitement 3 en aval. Ces circuits de traitement comportent des circuits de détection 31 pour la voie 1 et 32 pour la voie 2 pour sélectionner les signaux détectés supérieurs à un seuil SD donné fournis par un générateur de seuil 4.

Les signaux S3 et S4 détectés par les deux voies sont corrélés dans un circuit corrélateur 33 dont la sortie S5 fournie le signal utile de détection.

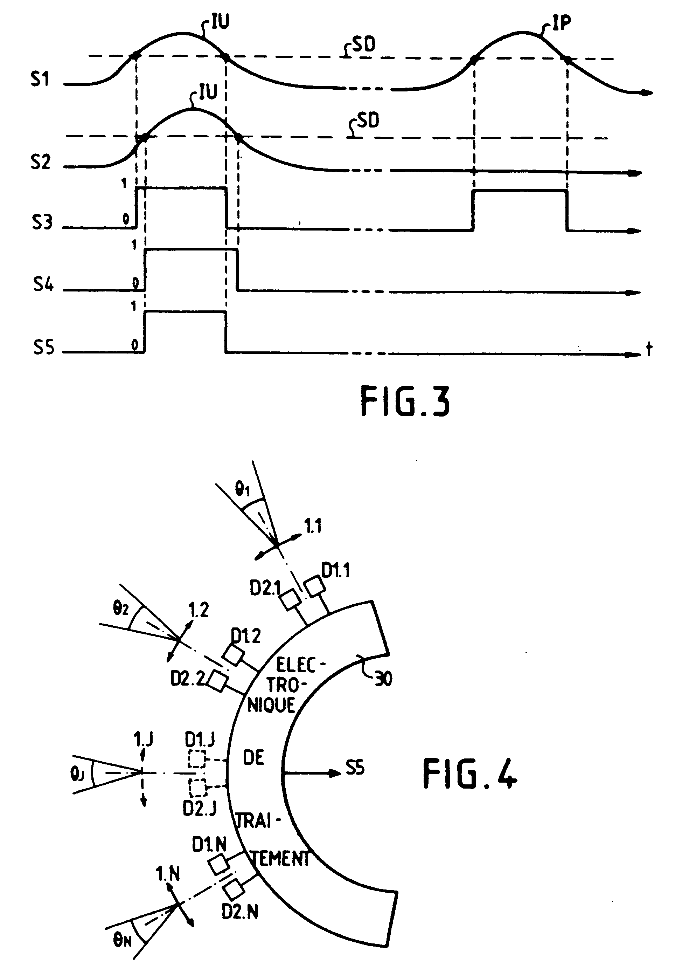

Comme on peut s'en rendre compte à l'aide des courbes de la figure 3 n'apparaît un signal utile à la sortie S5 de corrélation que si ce signal est déjà présent en sortie S3 et S4 des voies de détection, ce qui permet d'éliminer les impulsions parasites créées par les détecteurs eux-mêmes. En effet, comme on l'a vu précédemment ces impulsions parasites IP ont une forme semblable à celle de l'impulsion utile IU mais par contre leur probabilité d'apparition simultanée sur les deux voies est quasiment nulle. En conséquence, ils sont éliminés par la fonction finale de corrélation en 33.

Ainsi le fait de rajouter un deuxième détecteur D2 et une deuxième voie de détection 32 et de corréler les deux voies détectrices 31 et 32 permet d'éliminer les impulsions parasites gênantes et accroître considérablement le taux de fausse alarme de l'équipement.

Le traitement effectué permet de détecter les rayonnements laser ou autres attendusavec une voie unique D1-31. En effet, dès que le courant photodétecté est supérieur à la valeur de seuil sur les deux voies, celles-ci, qui sont identiques, détectent simultanément. Le traitement établit une corrélation temporelle des deux impulsions IU et délivrent alors un signal S5 de détection vraie. Le traitement permet d'éliminer toute impulsion parasite créée au niveau d'un détecteur. L'apparition de ces signaux parasites est liée à des phénomènes microélectroniques propres à chaque détecteur. Leurs instants d'apparition sont donc complètement aléatoires et la probabilité d'une apparition simultanée sur les deux voies d'un tel signal parasite est quasiment nulle. La solution proposée permet finalement de s'affranchir de la source de fausse alarme la plus gênante et donc d'obtenur une caractéristique C2 réduite comme l'indique la figure 1.

Les voies de détection comportent, comme représenté, des circuits d'amplification 31A et 32A et un circuit de comparaison à seuil 31C, 32C. Les circuits d'amplification peuvent être constitués par un préamplificateur en série avec un amplificateur ; la bande passante de ces circuits pouvant atteindre par exemple 40 MHz pour détecter des impulsions laser de quelques nanosecondes. Les comparateurs 31C et 32C sont réalisés en technologie intégrée rapide et fournissent une sortie normalisée (forme d'onde S3 et S4 de la figure 3). En conséquence, le circuit de corrélation 33 peut être simplement constitué par une porte logique "ET" 33. Les détecteurs D1 et D2 sont des détecteurs au silicium par exemple. Le système de détection ainsi équipé peut produire la corrélation pour des courants de valeur crête supérieure ou égale à 300 nanoampères environ au niveau de chaque détecteur. Le TFA obtenu est Naisément inférieur à 0,002. La bande passante choisie pour les amplificateurs est égale à la bande spectrale des impulsions laser à recevoir les plus étroites (de l'ordre de 15 nanosecondes par exemple) et à la bande passante propre au détecteur. Le système présente ainsi une sensibilité maximale et une efficacité maximale du traitement par corrélation. Les impulsions parasites ont alors une largeur minimale, ce qui permet de réduire le TFA vrai. L'invention s'applique en particulier à tous les secteurs d'alerte laser comportant une ou plusieurs voies optroniques, ces voies pouvant être utilisées pour la détection panoramique et éventuellement pour la localisation des impulsions laser incidentes.

La figure 4 rappelle la configuration à plusieurs voies optiques pour couvrir le champ total ϑ sous forme de champs élémentaires successifs ϑ1, ϑ2,...ϑJ,...ϑ_{N}. Généralement les voies optiques sont identiques et les champs élémentaires égaux, les axes optiques étant décalés de l'incrément ϑ/N de l'un au suivant. Cette configuration est utilisée par exemple pour asurer une couverture panoramique ou sectorale en gisement dans un équipement détecteur d'alerte laser.

Conformément à l'invention, chacune des voies comporte deux détecteurs D1J et D2J pour la voie J par exemple. Les détecteurs sont reliés à l'ensemble électronique de traitement 3 qui peut être réalisé sous divers formes dont trois modes possibles vont être décrits dans ce qui suit.

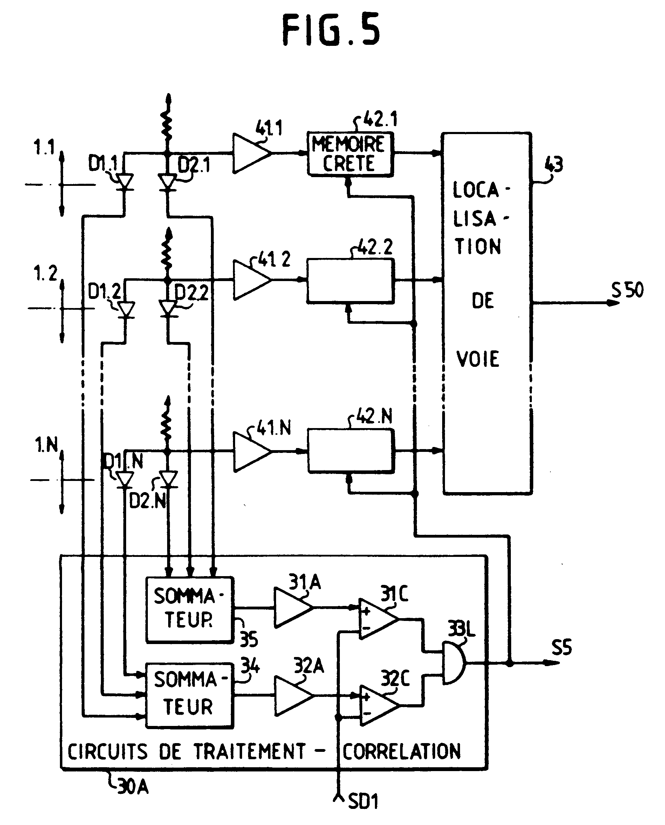

Suivant le premier mode de réalisation figure 5, la cellule de base se retrouve dans le circuit de traitement 30A avec en plus deux sommateurs 34 et 35 qui reçoivent l'un les sorties des N détecteurs D1.1 à D1.N correspondant à la première voie détectrice et le deuxième sommateur 35 aux sorties du deuxième élément de chaque paire de détecteurs c'est-à-dire les détecteurs D2.1 à D2.N voies optiques. La sortie S5 correspond bien au signal utile validé mais ne fournit pas dans ce montage l'information de voie, c'est-à-dire la direction de l'émetteur à ϑ/N près. En conséquence, les circuits de traitement sont complétés par N voies détectrices issues chacune d'une paire de détecteurs connectés en parallèle. Ces N voies comportent les amplificateurs 41.1 à 41.N. Ces amplificateurs sont suivis de circuits mémoire crête 42.1 à 42.N. commandés par la sortie du signal utile validé S5 c'est-à-dire le passage à 1 de cette sortie ; leur contenu est transféré à un circuit de localisation de voie 43 qui sélectionne la voie optronique dans laquelle est détecté le signal de plus fort niveau. Le circuit 43 peut être réalisé de diverses façons connues.

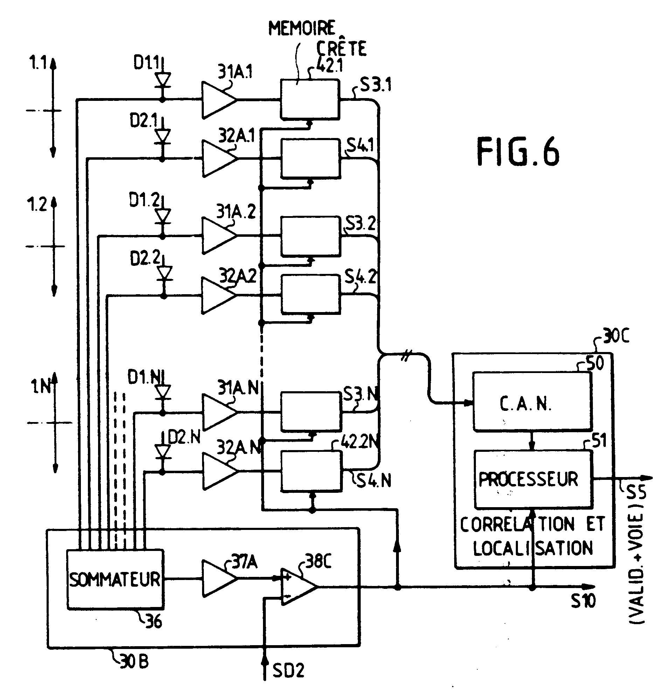

Suivant le deuxième mode de réalisation figure 6, le système comporte N voies optiques et 2N voies de détection. Chaque voie de détection comporte en aval des détecteurs les amplificateurs 31A et 32A. Ces amplificateurs sont suivis d'un circuit mémoire crête 42.1 à 42.2N. Un ensemble électronique 30B comportant un sommateur 36 alimenté par les 2N sorties des détecteurs et connecté en série avec un amplificateur 37A suivi d'un comparateur à seuil 38C le signal S10 délivré par cet ensemble est appliqué d'une part au circut mémoire crête 42 ainsi qu'une unité 30C de traitement par corrélation conformément à l'invention. Dans cette unité de traitement les signaux S3.J et S4.J de chaque paire de détecteurs sont corrélés et fournissent la détection vraie lorsqu'il s'agit du signal utile présent simultanément sur chaque voie détectrice de la voie optique de rang J considérée.

Le circuit de traitement 30C peut être constitué d'une batterie de corrélateurs après mise en forme du signal, ou de manière préférentielle, comme indiqué, avec un circuit de conversion analogique-numérique 50 suivi d'un circuit processeur 51 qui effectue les traitements de fausse alarme par corrélation en comparant les signaux S3.J et S4.J entre eux pour les N voies. Il y a lieu de remarquer que le circuit processeur peut effectuer en même temps le traitement de localisation étant donné qu'il détient l'information d'amplitude du signal après la conversion numérique en 50 et qu'il possède également l'information origine du signal c'est-à-dire de quelle voie il émane. En conséquence dans cette forme de réalisation la sortie S5 valide le signal utile et peut comporter également l'information de voie c'est-à-dire la direction du champ élémentaire ϑJ suivant lequel a été reçu le signal détecté.

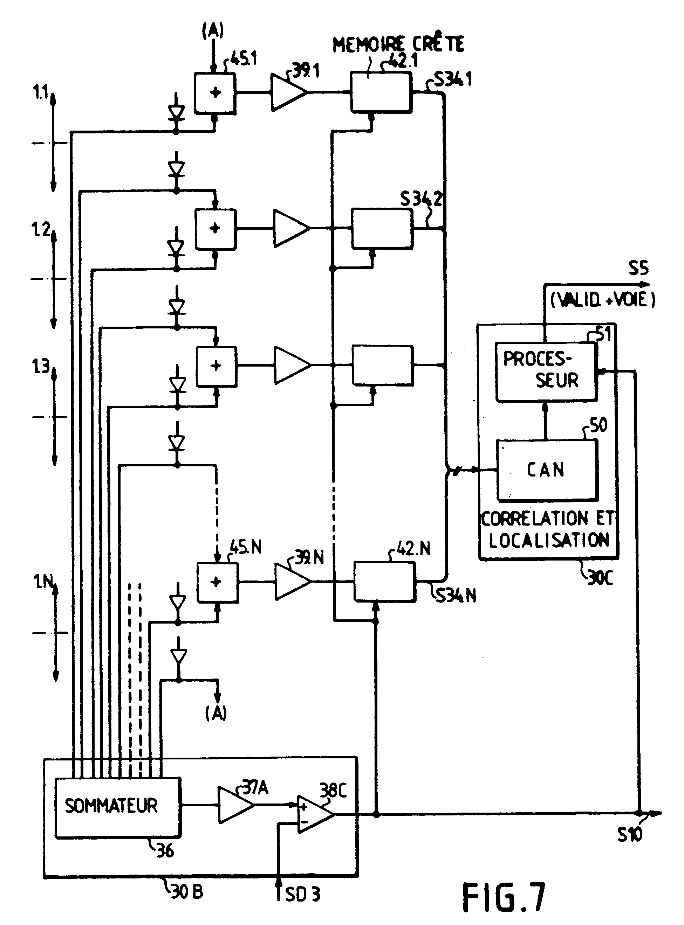

Suivant le troisième mode de réalisation figure 7, on obtient ici encore un signal de sortie S5 qui comporte à la fois la sélection du signal utile avec élimination des impulsions parasites et l'information de la voie optique d'où provient ce signal. Suivant cette réalisation, le nombre d'amplificateurs 39.1 à 39.N et le nombre de circuits mémoires crête 42.1 à 42.N est égal à N et donc divisé par deux, ce qui accroît la compacité du matériel. Les N voies détectrices sont issues comme représenté d'un couple d'éléments détecteurs mais relatifs l'un à une voie optique 1.J et l'autre à la voie optique suivante 1.(J+1). Ceci est obtenu avec les circuits sommateurs 45.1 et 45.N. Les sorties détectées S34.1 à S34.N sont appliquées comme précédemment à une circuit 30C de traitement par corrélation.

La réalisation figure 6 comparée à celle de la figure 5 présente l'avantage de ne pas être critique au couplage entre voies ; par contre, elle est plus complexe si le nombre de voies N est important. Pour les deux dernières réalisations selon la figure 6 et 7 il peut être intéressant d'utiliser pour chaque voie deux détecteurs intégrés dans un même boîtier, par exemple bi-cellule.

La dernière version figure 7 plus simple est plus compacte et préférentielle.

## Revendications

1. Système détecteur d'impulsions lumineuses à taux de fausses alarmes très réduit, comportant successivement : des moyens optiques de réception d'un rayonnement dans un champ total déterminé, ledit champ total étant couvert par au moins une voie optique réceptrice associée à un élément détecteur du rayonnement reçu, et des moyens de traitement des signaux détectés comprenant des circuits de sélection des signaux détectés supérieurs à un seuil et formant une voie détectrice, ledit système détecteur étant caractérisé en ce que, pour insensibiliser le système à des signaux parasites créés par l'élément détecteur (D1) et traités par la voie détectrice (31),il comprend en outre un deuxième élément détecteur (D2) couvrant la même partie du champ total de détection que le premier et couplé à une deuxième voie détectrice (32), les deux voies détectrices (31, 32) étant associées à la même voie optique (1) et en ce que les moyens de traitement (3) comprennent également des moyens de corrélation (33) des signaux présents simultanément sur les deux voies détectrices pour produire une sélection ultérieure des impulsions lumineuses reçues.

2. Système selon la revendication 1, caractérisé en ce que les moyens de corrélation (33) comportent un circuit logique (33L) porte "ET" couplé aux sorties des deux voies détectrices (31,32) après comparaison au seuil, pour fournir un signal utile (S5) caractéristique des impulsions lumineuses reçues.

3. Système selon la revendication 2 caractérisé en ce que les moyens de corrélation (33) comportent un circuit convertisseur analogique-numérique (50) et un circuit processeur (51) pour traiter les données numériques obtenues et sélectionner les impulsions lumineuses reçues.

4. Système selon l'une des revendications 2 et 3, caractérisé en ce qu'il comporte N voies optiques (1.1 à 1.N) chacune associée à une paire de détecteurs (D.1.1, D.2.1 ;...; D1.N, D2.N), les détecteurs de chaque paire étant connectés à deux circuits sommateurs différents (34, 35) les sorties des deux circuits sommateurs étant respectivement connectés auxdits circuits de sélection à seuil (31C, 32C) couplés au circuit de corrélation (33), les détecteurs de chaque paire étant connectés en parallèle pour former en outre N voies détectrices comportant chacune un circuit mémoire crête (42.1 à 42.N) commandé par la sortie (S5) du circuit de corrélation et raccordé à un circuit (43) de localisation de la vole qui reçoit le flux maximal.

5. Système selon l'une quelconque des revendications 2 et 3, caractérisé en ce qu'il comporte N voies optiques (1.1 à 1.N) chacune associée à une paire de détecteurs (D1.1, D2.1 ; ...; D1.N, D2.N) pour former 2N voies détectrices ayant chacune un circuit mémoire crête (42.1 à 42.N) connecté audit circuit de corrélation (30C), lesdits détecteurs étant par ailleurs connectés à un sommateur (36) suivi dudit circuit de sélection à seuil (38C) dont la sortie est transmise au circuit mémoire crête et au circuit de corrélation.

6. Système selon l'une des revendications 2 et 3, caractérisé en ce qu'il comporte N voies optiques (1.1 à 1.N) chacune associée à une paire de détecteurs (D1.1, D2.1 ;...; D1.N, D2.N,) un détecteur d'une voie optique et un détecteur de la vole suivante étant connectés à un sommateur (45.1 à 45.N) pour produire N voies détectrices ayant chacune un circuit mémoire crête (42.1 à 42.N) connecté audit circuit de corrélation (30C), lesdits détecteurs étant par ailleurs connectés à un circuit sommateur (36) suivi dudit circuit comparateur à seuil (38C) dont la sortie est transmise aux circuits mémoire crête et au circuit de corrélation.

7. Utillsation du dispositif selon l'une des revendications précédentes pour la détection d'alerte illuminateurs laser à impulsions.

## Claims

1. A system for detecting light pulses with a very low level of false alarms, comprising in series: optical means for receiving a radiation in a specified total field, said total field being covered by at least one receiving optical path associated with an element for detecting the received radiation, and means for processing the signals detected, comprising circuits for selection of the detected signals greater than a threshold and forming a detecting path, said detecting system being characterised in that, to desensitise the system to parasitic signals created by the detecting element (D1) and processed by the detecting path (31), it further comprises a second detecting element (D2) covering the same part of the total detection field as the first and coupled to a second detecting path (32), the two detecting paths (31,32) being associated with the same optical path (1) and in that the processing means (3) likewise comprise means (33) for correlation of the signals present simultaneously on the two detecting paths to produce a subsequent selection of the light pulses received.

2. A system according to Claim 1, characterised in that the correlation means (33) comprise an "AND" gate logic circuit (33L) coupled to the outputs of the two detecting paths (31,32) after comparison with the threshold, to supply a useful signal (S5) characteristic of the light pulses received.

3. A system according to Claim 2, characterised in that the correlation means (33) comprise an analog-digital converter circuit (50) and a processor circuit (51) to process the digital data obtained and to select the light pulses received.

4. A system according to one of Claims 2 and 3, characterised in that it comprises N optical paths (1.1 to 1.N), each associated with a pair of detectors (D.1.1, D.2.1 ;...; D1.N, D2.N), the detectors of each pair being connected to two different summation circuits (34,35), the outputs of the two summation circuits being respectively connected to said threshold selection circuits (31C, 32C) coupled to the correlation circuit (33), the detectors of each pair being connected in parallel to form, in addition, N detecting paths each comprising a peak memory circuit (42.1 to 42.N) controlled by the output (S5) of the correlation circuit and joined to a circuit (43) for determination of the path which receives the maximum flow.

5. A system according to any one of Claims 2 and 3, characterised in that it comprises N optical paths (1.1 to 1.N) each associated with a pair of detectors (D1.1, D2.1; ... ; D1.N, D2.N) to form 2N detecting paths each having a peak memory circuit (42.1 to 42.N) connected to said correlation circuit (30C), said detectors being, in addition, connected to a summation arrangement (36) followed by said threshold selection circuit (38C), the output of which is transmitted to the peak memory circuit and to the correlation circuit.

6. A system according to one of Claims 2 and 3, characterised in that it comprises N optical paths (1.1 to 1.N) each associated with a pair of detectors (D1.1, D2.1; ... ; D1.N, D2.N,), a detector of an optical path and a detector of the following path being connected to a summation arrangement (45.1 to 45.N) to produce N detecting paths each having a peak memory circuit (42.1 to 42.N) connected to said correlation circuit (30C), said detectors being, in addition, connected to a summation circuit (36) followed by said threshold comparator circuit (38C), the output of which is transmitted to the peak memory circuits and to the correlation circuit.

7. The use of the device according to one of the preceding claims for the alarm detection of impulse laser illuminators.

## Patentansprüche

1. Detektorsystem für Lichtimpulse mit geringer Fehlalarmquote, wobei das System nacheinander aufweist: optische Mittel zum Empfang einer Strahlung in einem bestimmten Gesamtbeobachtungsfeld, das von mindestens einem optischen Empfangskanal in Verbindung mit einem Detektorelement für die empfangene Strahlung abgedeckt wird, und Mittel zur Verarbeitung der erfaßten Signale mit Kreisen zur Auswahl der oberhalb eines Schwellwerts erfaßten Signale, die eine Erfassungskanal bilden, dadurch gekennzeichnet, daß zur Desensibilisierung des Systems gegenüber von Störimpulsen, die vom Detektorelement (D1) erzeugt wurden und von dem Erfassungskanal (31) verarbeitet wurden, das System weiter ein zweites Detektorelement (D2) aufweist, das denselben Teil des Gesamtbeobachtungsfelds wie das erste Detektorelement überdeckt und an einen zweiten Erfassungskanal (32) gekoppelt ist, wobei die beiden Erfassungskanäle (31, 32) demselben optischen Kanal (1) zugeordnet sind, und daß die Verarbeitungsmittel (3) auch Mittel (33) zur Korrelation der gleichzeitig an den beiden Erfassungskanälen vorliegenden Signale enthalten, um eine spätere Selektion der empfangenen Lichtimpulse durchzuführen.

2. System nach Anspruch 1, dadurch gekennzeichnet, daß die Korrelationsmittel (33) einen logischen Kreis (33L) vom UND-Tor-Typ enthalten, der an die Ausgänge der beiden Erfassungskanäle (31, 32) nach dem Vergleich mit der Schwelle gekoppelt ist, um ein Nutzsignal (S5) zu liefern, das für die empfangenen Lichtimpulse charakteristisch ist.

3. System nach Anspruch 2, dadurch gekennzeichnet, daß die Korrelationsmittel (33) einen Analog-Digital-Wandler (50) und einen Prozessorkreis (51) enthalten, um die erhaltenen digitalen Daten zu verarbeiten und die empfangenen Lichtimpulse zu selektieren.

4. System nach einem der Ansprüche 2 und 3, dadurch gekennzeichnet, daß es N optische Kanäle (1.1 bis 1.N) aufweist, die je einem Paar von Detektoren (D.1.1, D.2.1; ...; D.1.N, D.2.N) zugeordnet sind, wobei die Detektoren jedes Paares an zwei unterschiedliche Summierkreise (34, 35) angeschlossen sind und die Ausgänge der beiden Summierkreise an die Schwellwertselektionskreise (31C, 32C) angeschlossen sind, welche ihrerseits an die Korrelationskreise (33) gekoppelt sind, wobei die Detektoren jedes Paares parallelgeschaltet sind, um außerdem N Erfassungskanäle zu bilden, die je einen Kreis zur Speicherung des Spitzenwerts (42.1 bis 42.N) enthalten, der von dem Ausgang (S5) des Korrelationskreises gesteuert wird und an einen Kreis (43) zur Lokalisierung des Kanals angeschlossen ist, der den größten Lichtfluß empfängt.

5. System nach einem beliebigen der Ansprüche 2 und 3, dadurch gekennzeichnet, daß es N optische Kanäle (1.1 bis 1.N) enthält, die je einem Paar von Detektoren (D1.1, D2.1; ...; D1.N, D2.N) zur Bildung von 2N Erfassungskanälen zugeordnet sind und je einen Kreis zur Speicherung des Spitzenwerts (42.1 bis 42.N) besitzen, der an den Korrelationskreis (30C) angeschlossen ist, wobei die Detektoren im übrigen an ein Summierglied (36) angeschlossen sind, dem ein Schwellwertselektionskreis (38C) nachgeschaltet ist, wobei das Ausgangssignal dieses Kreises an den Kreis zur Speicherung des Spitzenwerts und an den Korrelationskreis übertragen wird.

6. System nach einem der Ansprüche 2 und 3, dadurch gekennzeichnet, daß es N optische Kanäle (1.1 bis 1.N) aufweist, die je einem Paar von Detektoren (D1.1, D2.1; ...; D1.N, D2.N) zugeordnet sind, wobei ein Detektor eines optischen Kanals und ein Detektor des nächstfolgenden optischen Kanals an ein Summierglied (45.1 bis 45.N) angeschlossen sind, um N Erfassungskanäle zu bilden, die je einen an den Korrelationskreis (30C) angeschlossenen Kreis zur Speicherung des Spitzenwerts (42.1 bis 42.N) enthalten, wobei die Detektoren im übrigen an einen Summierkreis (36) gefolgt von dem Schwellwertkomparatorkreis (38C) angeschlossen sind und das Ausgangssignal dieses letzteren Kreises an die Kreise zur Speicherung des Spitzenwerts und an den Korrelationskreis übertragen wird.

7. Verwendung der Vorrichtung nach einem der vorhergehenden Ansprüche für die Alarmerfassung von gepulsten Laserpeilstrahlen.
